# EUROPÄISCHE PATENTSCHRIFT

(11) **EP 0 516 954 B1**
(45) Veröffentlichungstag und Bekanntmachung des Hinweises auf die Patenterteilung: **06.12.1995**
(21) Anmeldenummer: 92106709.6
(22) Anmeldetag: 18.04.1992
(51) Int. Cl.: B65D 6/18, B65D 1/40

(54) **Zusammenklappbarer Faltbehälter**
Collapsible folding container
Boîte pliante repliable

(30) Priorität: 29.05.1991 DE 4117663
(43) Veröffentlichungstag der Anmeldung: 09.12.1992
(73) Patentinhaber: Focke & Co. (GmbH & Co.), 27283 Verden (DE)
(72) Erfinder: Focke, Heinz, W-2810 Verden (DE); Gosebruch, Harald, Dr., W-3000 Hannover 1 (DE)
(74) Vertreter: MEISSNER, BOLTE & PARTNER

(56) Entgegenhaltungen:
- EP-A- 0 053 232
- EP-A- 0 306 381
- DE-A- 2 750 849
- US-A- 2 144 318
- US-A- 4 753 348
- US-A- 4 828 132
- US-A- 5 042 713

## Beschreibung

Die Erfindung betrifft einen Faltbehälter mit Bodenwand, Deck wand und aus steifem, wasserfestem bzw. wasserabweisendem Kunststoff bestehenden Seitenwänden, wobei die Wandungen, insbesondere die Seitenwände, miteinander im Bereich von Kanten durch wasserfeste, elastische Gelenkstreifen verbunden sind und wobei der offene Faltbehälter flach zusammenlegbar ist.

Ein wesentliches Problem der Verpackungstechnik ist der Verbleib gebrauchten Verpackungsmaterials. Zur Verminderung des Entsorgungsumfangs und zur Schonung der Ressourcen sind Verpakkungen erforderlich, die zumindest teilweise mehrfach gebraucht werden können. Hierzu gehört eine gewisse Beständigkeit und Unempfindlichkeit gegen äußere Einflüsse, um einen mehrfachen Umlauf des Verpackungsmaterials zu ermöglichen. Voraussetzung ist u.a. ein kostengünstiger und raumsparender Rücktransport der Verpackungen. Weiterhin sollte das Verpackungsmaterial nach letztmaliger Verwendung recyclebar, d.h. dem Produktionsprozeß wieder zuführbar sein. Insbesondere gelten die genannten Anforderungen für Großgebinde-Verpackungen für Waren auf dem Weg vom Produzenten zum Handelspartner. Gerade hier kommt es auf einen kostengünstigen, schnellen Transport robuster Packungen an. Die weitgehend üblichen Faltkartons aus Pappe (Karton) sind für einen mehrfachen Umlauf nicht genügend beständig und landen außerdem nach Gebrauch auf dem Abfall. Zur Konservierung besonders empfindlicher Güter ist es schon bekannt, faltbare Transportbehälter mit mehrlagigen und auch wasserfesten Wandungen zu verwenden. Dabei sind die Faltlinien zwischen miteinander verbundenen Wandungen durch Querschnittsschwächungen hergestellt. Ein derartiger Behälter ist in der GB 1583324 gezeigt. Dabei ist nicht sichergestellt, daß auch im Bereich der Faltlinien eine gewisse Wasserfestigkeit und damit Beständigkeit vorhanden ist. Auch ist die Herstellung gezielter Querschnittsschwächungen sehr aufwendig. Ein Behälter mit einem flexiblen Material zur Ausbildung von Gelenkstreifen zwischen Behälterwandungen zeigt die DE-A-2750849. Die Wandungen selbst sind nicht näher beschrieben. Der Oberbegriff des Anspruchs 1 und des als unabhängiger Anspruch anzusehenden Anspruchs 6 entspricht diesem Stand der Technik.

Vor diesem Hintergrund ist es Aufgabe der vorliegenden Erfindung, einen umweltfreundlichen, weil mehrfach umlauffähigen und zugleich möglichst einfach herstellbaren Faltbehälter zu schaffen.

Zur Lösung der Aufgabe ist der erfindungsgemäße Faltbehälter gemäß Anspruch 1 dadurch gekennzeichnet, daß zumindest die Seitenwände je zwei Außenlagen mit dazwischen liegenden, quergerichteten Stegen aufweisen, wobei die Gelenkstreifen zwischen umlaufenden Rändern der Seitenwände eingefaßt sind. Die beschriebene Ausbildung der Seitenwände ermöglicht eine besonders einfache Herstellung aus Kunststoff, etwa durch Extrusion. Zugleich sind die Gelenkstreifen durch die Einfassung zwischen den umlaufenden Rändern zuverlässig mit den Seitenwänden verbunden.

Eine weitere Lösung der Aufgabe ist durch den Faltbehälter gemäß Anspruch 6 gegeben, wobei die Gelenkstreifen - im Gegensatz zu Anspruch 1 - mit der Innenseite oder der Außenseite der Wände bzw. mit den jeweils zugehörigen Rändern verbunden sind, insbesondere durch thermisches Siegeln oder Kleben.

Weiterbildungen der Erfindung gemäß den Unteransprüchen betreffen den Aufbau des Faltbehälters, die Werkstoffauswahl sowie spezielle Ausgestaltungen des Gelenkstreifens und der Behälterwandungen.

Vorteilhafte Ausführungsformen der Erfindung werden im folgenden anhand von Zeichnungen näher erläutert. Es zeigen:
- Fig. 1: eine perspektivische Darstellung eines erfindungsgemäßen Faltbehälters;
- Fig. 2: eine Draufsicht auf einen auseinandergefalteten Faltbehälter mit Seitenwänden, Bodenwand, Deckwand und Faltlappen;
- Fig. 3: einen Querschnitt durch den oberen Teil des Faltbehälters gemäß Fig. 1;
- Fig. 4: eine Darstellung der Verbindung zwischen Seitenwand und Faltlappen in vergrößertem Maßstab gemäß Fig. 3;
- Fig. 5: eine Draufsicht auf eine Wandung des erfindungsgemäßen Faltbehälters;
- Fig. 6: einen Querschnitt der Wandung gemäß Fig. 5 entlang der Linie VI-VI;
- Fig. 7: eine besondere Möglichkeit der Verbindung zweier Wandungen, ähnlich der in Fig. 4;
- Fig. 8: eine Draufsicht auf einen Zuschnitt für einen Teil eines mehrteiligen Faltbehälters;
- Fig. 9: eine Draufsicht auf einen auseinandergefalteten weiteren und zum in der Fig. 8 dargestellten passenden Teil;
- Fig. 10: einen Querschnitt durch einen mehrteiligen Faltbehälter mit Teilen gemäß den Fig. 8 und 9;
- Fig. 11: einen Querschnitt entsprechend Fig. 10, jedoch nur unter Darstellung des unteren Teils und des eingelegten Packgutes; und
- Fig. 12: einen erfindungsgemäßen Faltbehälter im flach geklappten Zustand.

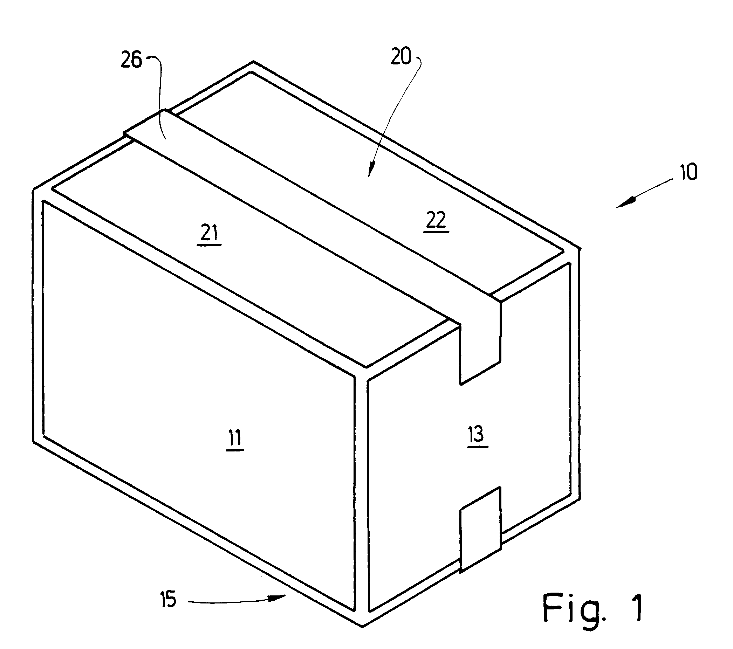

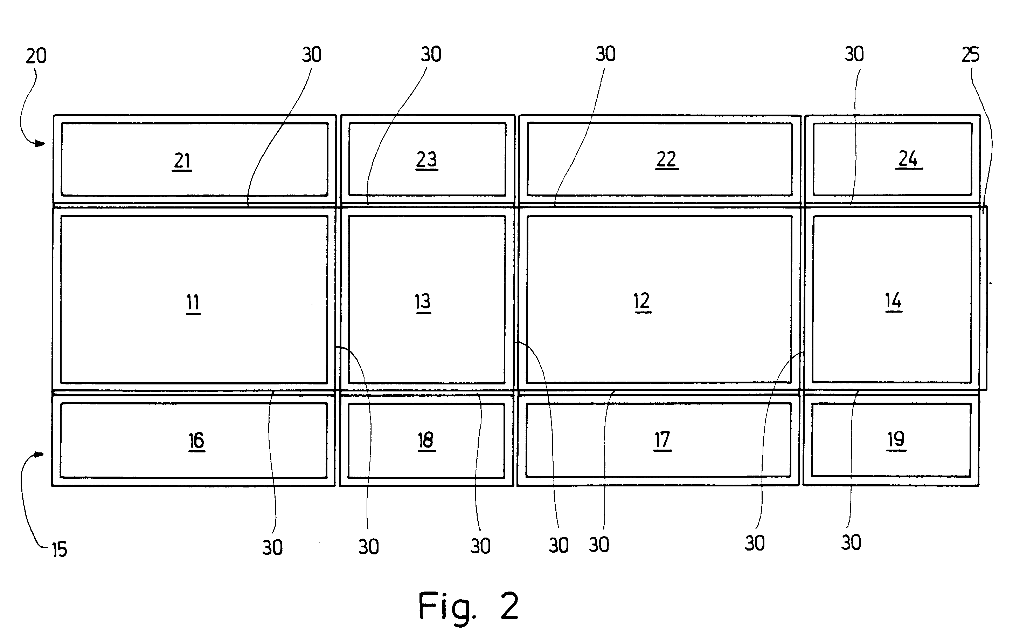

Es wird zunächst Bezug genommen auf die Fig. 1 und 2. Ein rechteckiger Faltbehälter 10 besteht aus zwei großen Seitenwänden 11, 12 und zwei kleinen Seitenwänden 13, 14. Zur Bildung einer Bodenwand 15 sind untere große Faltlappen 16, 17 und kleine Faltlappen 18, 19 vorgesehen, die jeweils mit den Seitenwänden 11 bis 14 gelenkig verbunden sind. In entsprechender Weise sind zur Bildung einer Deckwand 20 obere große und kleine Faltlappen 21 bis 24 vorgesehen. Gelenkige Verbindungen bestehen weiterhin zwischen den Seitenwänden 11 bis 14. In der Fig. 2 ist an der kleinen Seitenwand 14 rechts ein Gelenkstreifen 25 angedeutet. Im räumlich gefalteten oder im flachgelegten Zustand des Faltbehälters 10 ist mit dem Gelenkstreifen 25 die kleine Seitenwand 14 stets mit der großen Seitenwand 11 verbunden. Gemäß Fig. 2 sind zwischen den nebeneinanderliegenden Faltlappen keine Verbindungen oder Gelenkstreifen vorgesehen. Zum Verschliessen des Faltbehälters 10 ist in der Fig. 1 ein Klebestreifen 26 vorgesehen, der aus recyclefähigem Material, beispielsweise Papier, besteht und mit einer Beschichtung versehen ist, derart, daß er zum Öffnen des Faltbehälters 10 vollständig abziehbar ist.

In einer anderen Ausführungsform ist der Faltbehälter 10 mit einem naturgemäß mehrfach verwendbaren Klettverschluß versehen. Beispielsweise ist der Streifen 26 als Klettband ausgebildet. Unterhalb desselben, das heißt durch diesen abgedeckt und deshalb in der Fig. 1 nicht sichtbar, sind dann mit dem Klettband korrespondierende Klettstreifen mit den Wandungen 21, 22 bzw. weiteren Wandungen dauerhaft verbunden.

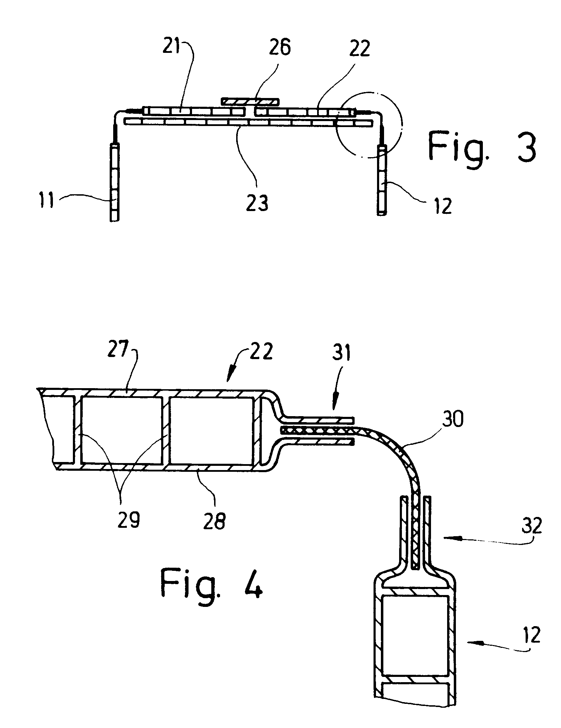

Die Seitenwände 11 bis 14 und gegebenenfalls die Faltlappen 16 bis 19 und 21 bis 24 bestehen aus einem steifen, wasserfesten bzw. wasserabweisenden Material. Die Fig. 3 und 4 zeigen den besonderen Aufbau im Querschnitt. Danach sind die Wandungen (Seitenwände und Faltlappen) durch mehrlagige Deckplatten gebildet. Diese sind aus Kunststoff und weisen zwei Außenlagen 27, 28 mit hierzu quergerichteten, dazwischenliegenden Stegen 29 auf. Letztere sind gerade und ermöglichen so eine einfache Herstellung der (Kunststoff-) Deckplatten durch Extrusion.

Fig. 4 zeigt als weitere Besonderheit die Verbindung zwischen dem oberen großen Faltlappen 22 und der großen Stirnwand 12 durch einen Gelenkstreifen 30. Dieser besteht aus einem Gewebe, insbesondere aus Kunststoff, welches gegebenenfalls zusätzlich mit Kunststoff beschichtet ist. Der Gelenkstreifen 30 ist zwischen umlaufenden Rändern 31, 32 des Faltlappens 22 und der Seitenwand 12 eingefaßt. Zur besseren Verbindung sind die Ränder 31, 32 der Wandungen mit den Gelenkstreifen unter Wärmeeinwirkung verpreßt bzw. versiegelt. Soweit nicht anders ausgeführt ist die beschriebene Verbindungsart zwischen dem Faltlappen 22 und der Seitenwand 12 auch zwischen den anderen Wandungen vorgesehen. Die Gelenkstreifen 30 sind weitgehend elastisch und erlauben ein vielmaliges Falten des Faltbehälters 10. Die beschriebene Einfassung zwischen den Außenlagen 27, 28 im Bereich der Ränder 31, 32 verhindert ein Ausfransen des Gelenkstreifengewebes.

Die Deckplatten bestehen aus Polycarbonat. Besonders vorteilhaft unter Berücksichtigung der Wiederaufarbeitung und der Zurückführung in den Herstellungsprozeß ist auch die Verwendung von Polyamid und Polypropylen. Soweit der Gelenkstreifen 30 und das Klettband 26 aus demselben Material bestehen wie die Wandungen (Seitenwände, Faltlappen), ist eine vollständige Recyclebarkeit des Faltbehälters 10 gegeben.

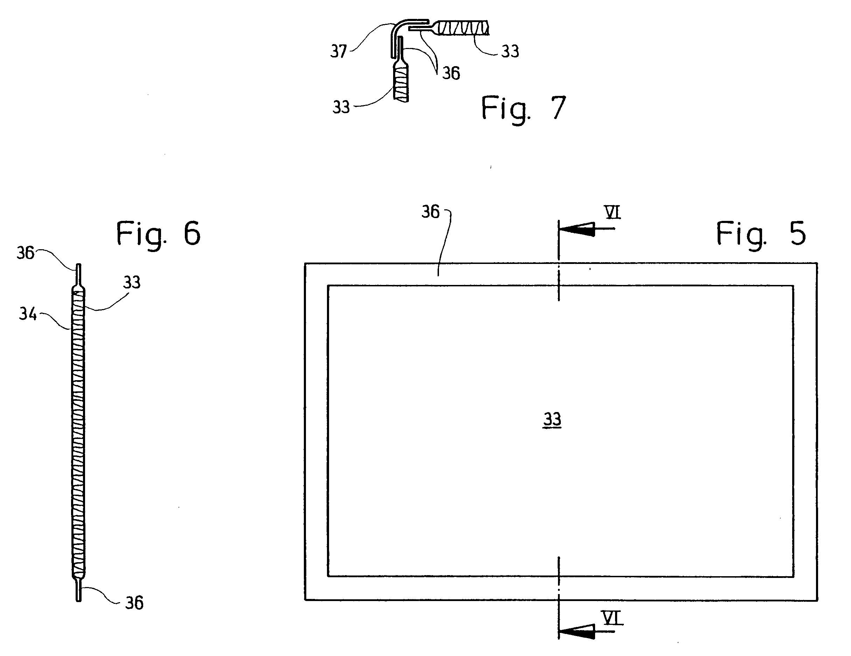

Die Fig. 5, 6 und 7 zeigen eine weitere Ausführungsform eines erfindungsgemäßen Faltbehälters. Außenlagen 33, 34 sind in Randbereichen 36 miteinander fest und flüssigkeitsdicht verbunden, etwa durch Klebung oder Verschweißung. Gleiches gilt auch für die Außenlagen 27, 28 im Bereich ihrer Ränder 31, 32.

Fig. 7 zeigt eine spezielle Verbindungsart analog zur Verbindung gemäß Fig. 4. In der Fig. 7 ist ein Gelenkstreifen 37 zur Verbindung zweier Wandungen jeweils außen auf die Randbereiche 36 aufgepreßt, mit diesen verklebt oder versiegelt. Die so gebildete Verbindung stellt zugleich einen Kantenschutz dar. Nach einer nicht gezeigten Ausführungsform sind die Verbindungsarten gemäß Fig. 4 und Fig. 7 kombiniert. Möglich ist auch ein doppelseitiger Gelenkstreifen auf beiden Seiten der Randbereiche 36 gemäß Fig. 7. Bezüglich der Werkstoffauswahl gilt das Gleiche wie zuvor im Zusammenhang mit den Fig. 1 bis 4 Ausgeführte.

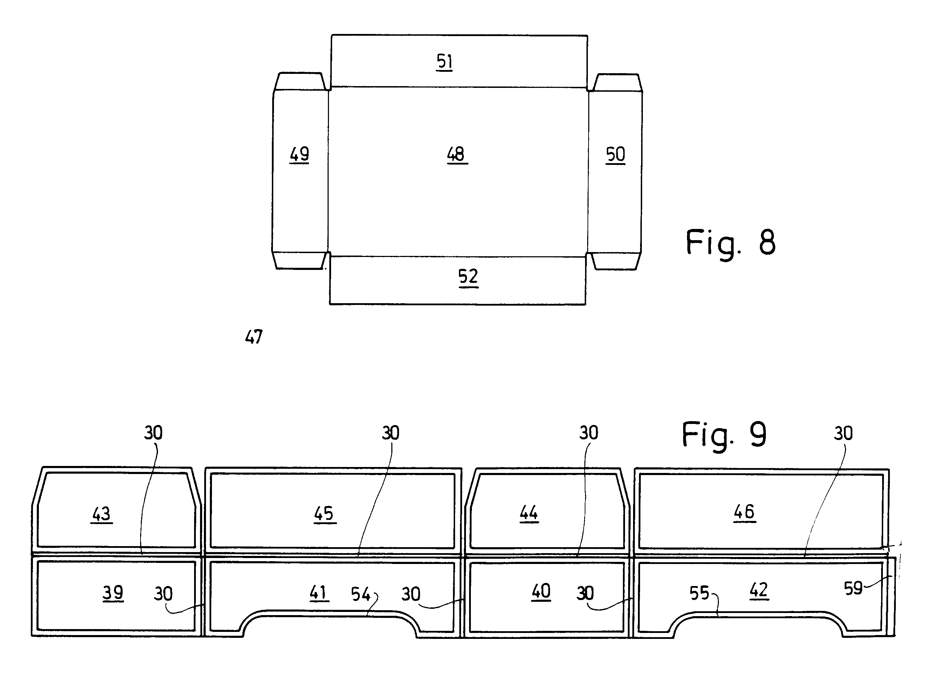

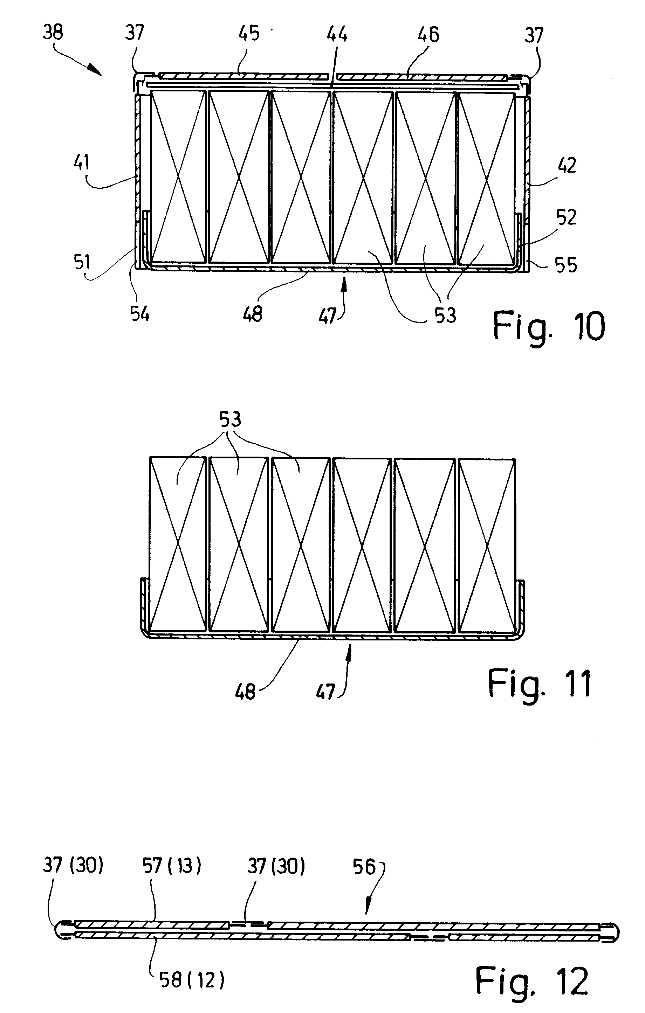

Die Fig. 8 bis 11 zeigen eine besondere zweiteilige Ausführungsform eines erfindungsgemäßen Faltbehälters. Analog zur Fig. 2 ist in der Fig. 9 eine ausgebreitete Darstellung für einen rechteckigen Faltbehälter 38 mit zwei kleinen Seitenwänden 39, 40 und zwei großen Seitenwänden 41, 42 erkennbar. An die Seitenwände schließen sich nach oben obere Faltlappen 43 bis 46 an. Die Wandungen (Seitenwände und Faltlappen) und die Verbindungen zwischen diesen entsprechen in ihrem Aufbau einer oder mehreren der zuvor beschriebenen Ausführungsformen. Der zweite Teil des Faltbehälters 38 besteht aus einem sogenannten Tray, wie er beispielsweise durch einen Zuschnitt gemäß Fig. 8 herstellbar ist. Der Tray 47 weist gemäß Fig. 8 eine Bodenwand 48 mit ringsum anschließenden Seitenborden 49 bis 52 auf. Die Fig. 10, 11 zeigen den Tray 47 im Querschnitt in gefalteter Stellung mit eingelegtem Packungsgut, in diesem Fall mehrere kleine Packungen 53. Die Größe des Trays 47 ist so bemessen, daß die Seitenborde 49 bis 52 innerhalb der Seitenwände 39 bis 42 zu liegen kommen (Fig. 10). Eine Besonderheit dieser Ausführungsform besteht darin, daß der in Verbindung mit Fig. 9 beschriebene Teil des Faltbehälters 38 im wesentlichen für den Transport benötigt wird und entsprechend zwischen dem Hersteller und dem Handel umläuft. Der Tray 47 dient als dauerhafte Aufnahme für die Packungen 53, ist zu diesem Zweck vorzugsweise aus Pappe gefertigt und kann zugleich als Präsentationshilfe, etwa im Einzelhandel, verwendet werden. Die Packungen 53 sind innerhalb des Trays 47 hochkant angeordnet, so daß der in der Fig. 10 obenliegende Teil des Faltbehälters 38, gegebenenfalls nach Lösen einer Klebeverbindung, leicht und ohne Mitnahme einer Packung nach oben abgehoben werden kann. Zu diesem Zweck sind die großen Seitenwände 41, 42 mit griffgünstigen Aussparungen 54, 55 im Bereich ihrer unteren Ränder versehen.

In einer nicht gezeigten Ausführungsform ist ein erfindungsgemäßer Faltbehälter mit einem Doppeltray versehen. Hierzu besteht der Faltbehälter aus je einem Tray für den Boden und den Deckel und dazwischenliegenden umlauffähigen, miteinander verbundenen Seitenwänden.

Fig. 12 zeigt einen Faltbehälter 56 in flachgelegtem Zustand, wie er zum Rücktransport oder auch vor dem Befüllen eingenommen wird. Das Befüllen der Faltbehälter (gilt auch für die Faltbehälter 10 und 38) erfolgt in herkömmlicher Art und Weise. Die flachgelegten Behälter werden in Stapeln einer Verpackungsmaschine zugeführt, einzeln abgegriffen und an einander gegenüberliegenden, später benachbarten Seitenwänden 57, 58 gehalten und zu einer rechteckigen Hülle auseinandergezogen. In diese kann nun das Packungsgut, etwa kleinere Packungen, eingeführt werden. Eine hierfür einsetzbare Vorrichtung ist beispielsweise in der DE 34 29 761 A1 beschrieben.

In besonderer Weise werden die Faltbehälter 38 mit Tray 47 befüllt. Hierzu wird der Teil des Faltbehälters 38 gemäß Fig. 9 in der zuvor beschriebenen Weise zu einer rechteckigen Hülle aufgefaltet. Dabei ist die große Seitenwand 42 mit einem Gelenkstreifen 59 mit der kleinen Seitenwand 39 verbunden. Die Packungen 53 werden auf der Bodenwand 48 des Trays 47 abgelegt und zusammen mit diesem in die offene Hülle eingeführt. Ein Hochfalten der Seitenborde 49 bis 52 kann vor dem Einführen oder aber zugleich mit diesem erfolgen. Im letztgenannten Fall erfolgt das Umfalten der Seitenborde 49 bis 52 durch Anlage an den oberen Faltlappen 43 bis 46. Diese werden im Anschluß daran auf die Packungen 53 gefaltet.

## Patentansprüche

1. Faltbehälter mit Bodenwand (15), Deckwand (20) und aus steifem, wasserfestem bzw. wasserabweisendem Kunststoff bestehenden Seitenwänden (11, 12, 13, 14), wobei die Wände, insbesondere die Seitenwände (11 bis 14), miteinander im Bereich von Kanten durch wasserfeste, elastische Gelenkstreifen (30) verbunden sind und wobei der offene Faltbehälter flach zusammenlegbar ist, **dadurch gekennzeichnet**, daß zumindest die Seitenwände (11 bis 14) je zwei Außenlagen (27, 28) mit dazwischen liegenden, quergerichteten Stegen (29) aufweisen, wobei die Gelenkstreifen (30) zwischen umlaufenden Rändern (31, 32) der Seitenwände (11 bis 14) eingefaßt sind.

2. Faltbehälter nach Anspruch 1, dadurch gekennzeichnet, daß Bodenwand (15) und Deckwand (20) aus an den oberen und unteren freien Rändern der Seitenwände (11 bis 14) angeordneten Faltlappen (16 bis 19, 21 bis 24) gebildet sind, wobei auch die Faltlappen nach Art der Seitenwände (11 bis 14), d.h. mit zwei Außenlagen (27, 28) und dazwischen liegenden, quergerichteten Stegen (29) ausgebildet sind, wobei Gelenkstreifen (30) zwischen umlaufenden Rändern (31, 32) eingefaßt sind.

3. Faltbehälter nach Anspruch 1 oder 2, dadurch gekennzeichnet, daß die Ränder (31, 32) der Wände mit den Gelenkstreifen (30) unter Wärmeeinwirkung verpreßt bzw. versiegelt sind.

4. Faltbehälter nach einem oder mehreren der Ansprüche 1 bis 3, dadurch gekennzeichnet, daß die Gelenkstreifen (30) aus Kunststoff bestehen und insbesondere mit einer Verstärkungseinlage aus textilem Gewebe versehen sind.

5. Faltbehälter nach einem oder mehreren der Ansprüche 1 bis 4, dadurch gekennzeichnet, daß die Außenlagen (27, 28) im Bereich der Ränder (31, 32) miteinander verbunden, insbesondere flüssigkeitsdicht verpreßt, versiegelt oder verklebt sind.

6. Faltbehälter nach Anspruch 5, dadurch gekennzeichnet, daß die Gelenkstreifen (30, 37) - im Gegensatz zu Anspruch 1 - mit der Innenseite (Außenlage 28, 33) oder der Außenseite (Außenlage 29, 34) der Wände bzw. mit den jeweils zugehörigen Rändern (31, 32, 36) verbunden sind, insbesondere durch thermisches Siegeln oder Kleben.

7. Faltbehälter nach einem oder mehreren der Ansprüche 1 bis 6, dadurch gekennzeichnet, daß die Gelenkstreifen aus demselben Material bestehen wie die Seitenwände (11 bis 14) und ggf. vorhandene Faltlappen (16 bis 19, 21 bis 24).

8. Faltbehälter nach einem oder mehreren der Ansprüche 1 bis 7, dadurch gekennzeichnet, daß Bodenwand (15) und/oder Deckwand (20) aus einem gesonderten Zuschnitt (47) aus Karton, Wellkarton oder Papier bestehen und lösbar mit den Seitenwänden des Faltbehälters verbunden sind.

9. Faltbehälter nach einem oder mehreren der Ansprüche 1 bis 8, dadurch gekennzeichnet, daß wenigstens die Bodenwand (15) als Tray (47) ausgebildet ist, nämlich als Tablett mit umlaufenden Seitenborden, wobei die Seitenborde (49 bis 52) an der Innenseite oder an der Außenseite der Seitenwände anliegen und mit diesen lösbar verbunden sind.

10. Faltbehälter nach einem oder mehreren der Ansprüche 1 bis 9, gekennzeichnet durch einen einheitlichen Werkstoff, insbesondere Polypropylen, Polyamid oder Polycarbonat.

11. Faltbehälter nach einem oder mehreren der Ansprüche 1 bis 10, gekennzeichnet durch einen Verschluß mittels eines recyclebaren und vollständig abziehbaren Klebestreifens (26).

12. Faltbehälter nach einem oder mehreren der Ansprüche 1 bis 11, gekennzeichnet durch einen Verschluß mittels eines mehrfach verwendbaren Klettbandes.

## Claims

1. Folding container with a bottom wall (15), a top wall (20) and side walls (11, 12, 13, 14) which consist of a rigid, waterproof or water-repellent plastic, the walls, in particular the side walls (11 to 14), being connected to one another in the region of edges by waterproof, elastic hinge strips (30), and it being possible for the open folding container to be collapsed into a flat state, characterized in that at least the side walls (11 to 14) each exhibit two outer plies (27, 28) with transversely directed webs (29) located there-between, the hinge strips (30) being gripped between enclosing borders (31, 32) of the side walls (11 to 14).

2. Folding container according to Claim 1, characterized in that the bottom wall (15) and the top wall (20) are formed from folding tabs (16 to 19, 21 to 24) arranged at the upper and lower free borders of the side walls (11 to 14), the folding tabs also being designed in the manner of the side walls (11 to 14), i.e. with two outer plies (27, 28) and transversely directed webs (29) located therebetween, hinge strips (30) being gripped between enclosing borders (31, 32).

3. Folding container according to Claim 1 or 2, characterized in that the borders (31, 32) of the walls are pressed or sealed with the hinge strips (30) under the action of heat.

4. Folding container according to one or more of Claims 1 to 3, characterized in that the hinge strips (30) consist of plastic and are provided, in particular, with a reinforcing insert made of textile fabric.

5. Folding container according to one or more of Claims 1 to 4, characterized in that the outer plies (27, 28) are connected to one another, in particular are pressed, sealed or adhesively bonded in a liquid-tight manner, in the region of the borders (31, 32).

6. Folding container according to Claim 5, characterized in that - in contrast to Claim 1 - the hinge strips (30, 37) are connected to the inside (outer ply 28, 33) or the outside (outer ply 29, 34) of the walls or to the respectively associated borders (31, 32, 36), in particular by heat-sealing or adhesive bonding.

7. Folding container according to one or more of Claims 1 to 6, characterized in that the hinge strips consist of the same material as the side walls (11 to 14) and any folding tabs (16 to 19, 21 to 24) which are present.

8. Folding container according to one or more of Claims 1 to 7, characterized in that the bottom wall (15) and/or top wall (20) comprise a separate blank (47) made of cardboard, corrugated cardboard or paper and are connected releasably to the side walls of the folding container.

9. Folding container according to one or more of Claims 1 to 8, characterized in that at least the bottom wall (15) is designed as a tray (47), namely as a tray having side rims running around it, the side rims (49 to 52) bearing against the inside or against the outside of the side walls and being releasably connected to these.

10. Folding container according to one or more of Claims 1 to 9, characterized by a unitary material, in particular polypropylene, polyamide or polycarbonate.

11. Folding container according to one or more of Claims 1 to 10, characterized by a fastening by means of a recyclable adhesive strip (26) which can be pulled off completely.

12. Folding container according to one or more of Claims 1 to 11, characterized by a fastening by means of a touch-and-close tape which can be used repeatedly.

## Revendications

1. Récipient pliable avec une paroi fond (15), une paroi couvercle (20) et des parois latérales (11, 12, 13, 14) rigides, résistantes à l'eau ou constituées d'une matière plastique repoussant l'eau, les parois, en particulier les parois latérales (11 à 14), étant reliées ensemble dans la zone des arêtes au moyen de bandes articulées (30) élastiques résistantes à l'eau et le récipient pliable ouvert pouvant être plié à plat, caractérisé en ce qu'au moins les parois latérales (11 à 14) présentent chacune deux couches extérieures (27, 28) avec des nervures (29) intermédiaires, orientées transversalement, les bandes articulées (30) étant insérées entre les bords (31, 32) de pourtour des parois latérales (11 à 14).

2. Récipient pliable selon la revendication 1, caractérisé en ce que la paroi fond (15) et la paroi couvercle (20) sont constituées de languettes pliables (16 à 19, 21 à 24) disposées sur les bords libres supérieur et inférieur des parois latérales (11 à 14), les languettes pliables étant également réalisées à la façon des parois latérales (11 à 14) c'est-à-dire avec deux couches extérieures (27, 28) et des nervures (29) intermédiaires orientées transversalement, les bandes articulées (30) étant enserrées entre les bords (31, 32) de pourtour.

3. Récipient pliable selon la revendication 1 ou 2, caractérisé en ce que les bords (31, 32) des parois sont pressés, respectivement scellés, sous l'effet de la chaleur, avec les bandes articulées (30).

4. Récipient pliable selon l'une ou plusieurs des revendications 1 à 3, caractérisé en ce que les bandes articulées (30) sont en matière plastique et pourvues en particulier d'une garniture de renforcement en tissé textile.

5. Récipient pliable selon l'une ou plusieurs des revendications 1 à 4, caractérisé en ce que les couches extérieures (27, 28) sont reliées ensemble dans la zone des bords (31, 32), en particulier sont pressées, scellées ou collées d'une façon étanche aux liquides.

6. Récipient pliable selon la revendication 5, caractérisé en ce que les bandes articulées (30, 37) - au contraire de la revendication 1 - sont reliées à la face intérieure (couche extérieure 28, 33) ou à la face extérieure (couche extérieure 29, 34) des parois, respectivement sont reliées aux bords (31, 32, 36) afférents respectifs, en particulier par scellage thermique ou collage.

7. Récipient pliable selon l'une ou plusieurs des revendications 1 à 6, caractérisé en ce que les bandes articulées sont constituées du même matériau que les parois latérales (11 à 14) et, le cas échéant, que les languettes de pliage (16 à 19, 21 à 24) existantes.

8. Récipient pliable selon l'une ou plusieurs des revendications 1 à 7, caractérisé en ce que la paroi fond (15) et/ou la paroi couvercle (20) sont constituées d'un flan (47) séparé en carton, en carton ondulé ou en papier et sont reliées de façon désolidarisable aux parois latérales du récipient pliable.

9. Récipient pliable selon l'une ou plusieurs des revendications 1 à 8, caractérisé en ce qu'au moins la paroi fond (15) est réalisée sous forme de plateau (47), notamment sous forme de tablette avec des bordures latérales de pourtour, les bordures latérales (49 à 52) appuyant sur la face intérieure ou sur la face extérieure des parois latérales et étant reliées à celles-ci de façon désolidarisable.

10. Récipient pliable selon l'une ou plusieurs des revendications 1 à 9, caractérisé par un matériau unitaire, en particulier du polypropylène, du polyamide ou du polycarbonate.

11. Récipient pliable selon l'une ou plusieurs des revendications 1 à 10, caractérisé par une fermeture au moyen d'une bande adhésive (26) recyclable et pouvant être totalement enlevée.

12. Récipient pliable selon l'une ou plusieurs des revendications 1 à 11, caractérisé par une fermeture au moyen d'une bande à crampons, réutilisable plusieurs fois.
